# EUROPEAN PATENT APPLICATION

(11) **EP 3 163 884 A1**
(43) Date of publication of application: **03.05.2017**
(21) Application number: 16169059.9
(22) Date of filing: 10.05.2016
(51) Int. Cl.: H04N 21/41, H04N 5/76, H04N 21/433, H04N 21/2343, H04N 21/4402

(54) **IMAGE ACQUIRING METHOD AND APPARATUS, COMPUTER PROGRAM AND RECORDING MEDIUM**

(30) Priority: 29.10.2015 CN 201510718591
(71) Applicant: Xiaomi Inc., Beijing 100085 (CN)
(72) Inventor: ZHOU, Shiquan, 100085 BEIJING (CN); FU, Qiang, 100085 BEIJING (CN); HOU, Enxing, 100085 BEIJING (CN)
(74) Representative: Delumeau, François Guy

(57) **Abstract**

The present invention relates to an image acquiring method and apparatus, a computer program and a recording medium, and belongs to the field of Internet. The method comprises: detecting (201) whether a screen shot signal is triggered; sending (202) a screen shot request to a server when the screen shot signal is triggered, the screen shot request carrying a currently logged-in user account and a target smart device identification, so as to enable the server to send the screen shot request to a target smart device based on the user account and the target smart device identification; and receiving (203) from the server a screen shot image obtained by the target smart device performing screen shot on a currently-displayed picture based on the screen shot request.

## Description

### TECHNICAL FIELD

The present invention is related to the field of Internet, and more particularly, to an image acquiring method and apparatus, a computer program and a recording medium.

### BACKGROUND

Along with the swift development of Internet, there are more and more smart devices, such as computers, smart TVs and the like with the display function, and the utilization rate of the devices becomes increasingly high, however, in the using process of such devices, phenomena that wonderful pictures and other pictures that users want to store timely cannot be acquired are frequent. Therefore, an image acquiring method is needed urgently.

In the related arts, for example, when a smart TV, serving as a smart device, is in use, in order to obtain an image, a user can only take a current picture on the smart TV manually via a camera, a mobile phone, or the like. However, there is a problem of how to quickly and accurately acquire images on smart devices through simple operations.

### SUMMARY

To overcome the above problems in the related arts, the present invention provides an image acquiring method and apparatus, a computer program and a recording medium.

According to a first aspect of embodiments of the present invention, there is provided an image acquiring method suitable to be applied to a terminal, comprising:
detecting whether a screen shot signal is triggered;
sending a screen shot request to a server when the screen shot signal is triggered, the screen shot request carrying a currently logged-in user account and a target smart device identification, so as to enable the server to send the screen shot request to a target smart device based on the user account and the target smart device identification; and
receiving from the server a screen shot image obtained by the target smart device performing screen shot on a currently-displayed picture based on the screen shot request.

In a first possible implementation mode in combination with the first aspect, detecting whether the screen shot signal is triggered comprises:
determining that the screen shot signal is triggered when a smart home application which is currently logged in with the user account receives a screen shot instruction.

In a second possible implementation mode in combination with the first aspect, detecting whether a specified signal is triggered comprises:
judging whether the smart home application which is currently logged in with the user account is in a running state when a specified operation is detected; and
determining that the screen shot signal is triggered when the smart home application is in the running state.

In a third possible implementation mode in combination with the second possible implementation mode of the first aspect, the specified operation is for example a shake operation, a knocking operation, or a specified gesture operation.

According to a second aspect of embodiments of the present invention, there is provided an image acquiring apparatus suitable to be applied in a terminal, comprising:
a detecting module configured to detect whether a screen shot signal is triggered;
a sending module configured to send a screen shot request to a server when the screen shot signal is triggered, the screen shot request carrying a currently logged-in user account and a target smart device identification, so as to enable the server to send the screen shot request to a target smart device based on the user account and the target smart device identification; and
a receiving module configured to receive from the server a screen shot image obtained by the target smart device performing screen shot on a currently-displayed picture based on the screen shot request.

In a first possible implementation mode in combination with the second aspect, the detecting module comprises:
a first determining unit configured to determine that the screen shot signal is triggered when a smart home application which is currently logged in with the user account receives a screen shot instruction.

In a second possible implementation mode in combination with the second aspect, the detecting module comprises:
a judging module configured to judge whether the smart home application which is currently logged in with the user account is in a running state when a specified operation is detected; and
a second determining unit configured to determine that the screen shot signal is triggered when the smart home application is in the running state.

In a third possible implementation mode in combination with the second possible implementation mode of the second aspect, the specified operation can be a shake operation, a knocking operation, or a specified gesture operation.

According to a third aspect of embodiments of the present invention, there is provided an image acquiring apparatus suitable to be applied in a smart device, comprising:
a receiving module configured to receive a screen shot request from a server, wherein the screen shot request was sent to the server by a terminal when it detected that a screen shot signal is triggered;
a screen shot module configured to perform screen shot on a currently-displayed picture based on the screen shot request to obtain a screen shot image; and
a sending module configured to send the screen shot image to the server to enable the server to send the screen shot image to the terminal.

According to a fourth aspect of embodiments of the present invention, there is provided an image acquiring apparatus suitable to be applied in a terminal, comprising:
a processor; and
a memory configured to store instructions executable by the processor,
wherein the processor is configured to:
   detect whether a screen shot signal is triggered;
   send a screen shot request to a server when the screen shot signal is triggered, the screen shot request carrying a currently logged-in user account and a target smart device identification, so as to enable the server to send the screen shot request to a target smart device based on the user account and the target smart device identification; and
   receive from the server a screen shot image obtained by the target smart device performing screen shot on a currently-displayed picture based on the screen shot request.

According to a fifth aspect of embodiments of the present invention, there is provided an image acquiring apparatus suitable to be applied in a smart device, comprising:
a processor; and
a memory configured to store instructions executable by the processor,
wherein the processor is configured to:
   receive a screen shot request from a server, wherein the screen shot request was sent to the server by a terminal when it detected that a screen shot signal is triggered;
   perform screen shot on a currently-displayed picture based on the screen shot request to obtain a screen shot image; and
   send the screen shot image to the server to enable the server to send the screen shot image to the terminal.

In one particular embodiment, the steps of the image acquiring method are determined by computer program instructions.

Consequently, according to a sixth aspect, the invention is also directed to a computer program for executing the steps of an image acquiring method as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solutions of the embodiments of this invention have the following advantageous effects: in the embodiments of this invention, whether the screen shot signal is triggered is detected, when the screen shot signal is triggered, the screen shot request is sent to the server to enable the server to send the screen shot request to the target smart device, and the screen shot image from the server is received, so that a user can fast and accurately acquire an image which he or she wants to acquire by triggering the screen shot signal when he or she finds the image on the target smart device, the operation is simple, and the image acquiring efficiency is improved.

It should be understood that both the foregoing general description and the following detailed description are only exemplary and explanatory and are not restrictive of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is an architecture diagram showing an image acquiring system according to an exemplary embodiment.
Fig. 2 is a flow chart showing an image acquiring method according to an exemplary embodiment.
Fig. 3 is a flow chart showing an image acquiring method according to another exemplary embodiment.
Fig. 4 is a schematic drawing showing a prompt information display interface according to an exemplary embodiment.
Fig. 5 is a schematic drawing showing a smart identification display interface according to an exemplary embodiment.
Fig. 6 is a block diagram of a first image acquiring apparatus according to an exemplary embodiment.
Fig. 7 is a block diagram of a detecting module according to an exemplary embodiment.
Fig. 8 is a block diagram of a second image acquiring apparatus according to an exemplary embodiment.
Fig. 9 is a block diagram of a third image acquiring apparatus according to an exemplary embodiment.
Fig. 10 is a block diagram of a fourth image acquiring apparatus according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

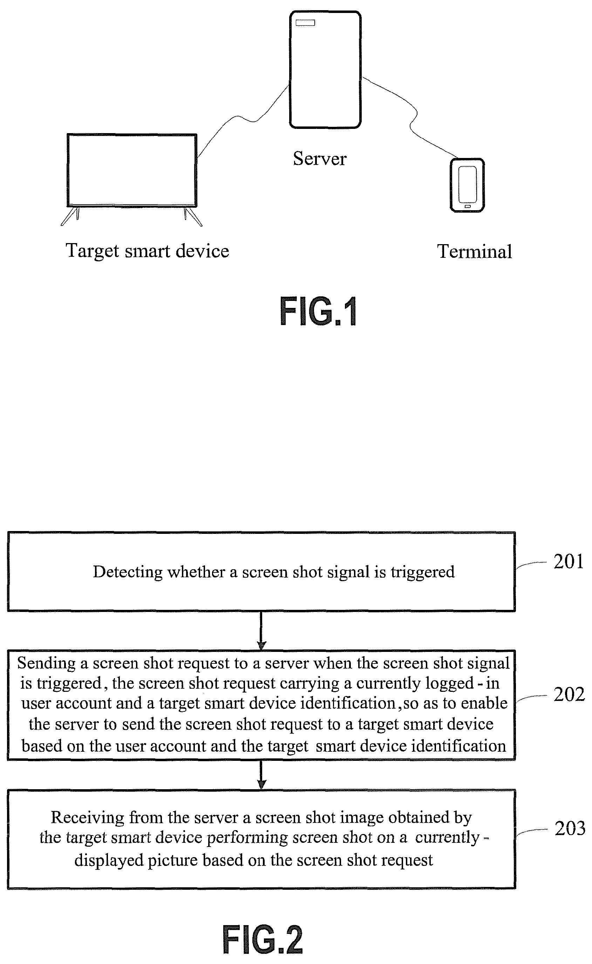

Fig. 1 is an architecture diagram showing an image acquiring system according to an exemplary embodiment. As shown in Fig. 1, the system comprises a terminal, a server and a target smart device. The terminal and the server are in wireless network or wired network connection with each other, so are the server and the target smart device. The terminal is configured to install a smart home application, and communicates with the server via the smart home application, so as to control the target smart device. The server is used as a communication transfer device between the terminal and the target smart device, and configured to transmit communication therebetween. The target smart device receives control information sent from the terminal via the server, so as to perform a corresponding control operation.

Fig. 2 is a flow chart showing an image acquiring method according to an exemplary embodiment. As shown in Fig. 2, the image acquiring method is applied to a terminal and comprises the steps as follows.

Step 201, detecting whether a screen shot signal is triggered.

Step 202, sending a screen shot request to a server when the screen shot signal is triggered, the screen shot request carrying a currently logged-in user account and a target smart device identification, so as to enable the server to send the screen shot request to a target smart device based on the user account and the target smart device identification.

Step 203, receiving from the server a screen shot image sent obtained by the target smart device performing screen shot on a currently-displayed picture based on the screen shot request.

In the embodiment of this invention, whether the screen shot signal is triggered is detected, when the screen shot signal is triggered, the screen shot request is sent to the server to enable the server to send the screen shot request to the target smart device, and the screen shot image from the server is received, so that a user can fast and accurately acquire an image which he or she wants to acquire by triggering the screen shot signal when he or she finds the image on the target smart device, the operation is simple, and the image acquiring efficiency is improved.

In another embodiment of the invention, detecting whether a screen shot signal is triggered comprises:
determining that the screen shot signal is triggered when a smart home application which is currently logged in with the user account receives a screen shot instruction.

In another embodiment of the invention, detecting whether a specified signal is triggered comprises:
judging whether the smart home application which is currently logged in with the user account is in a running state when a specified operation is detected; and
determining that the screen shot signal is triggered when the smart home application is in the running state.

In another embodiment of the invention, the specified operation can be a shake operation, a knocking operation, or a specified gesture operation.

All of the above alternative technical solutions may form other alternative embodiments of the present invention in an arbitrary combination thereof, and the description thereof will not be repeated herein.

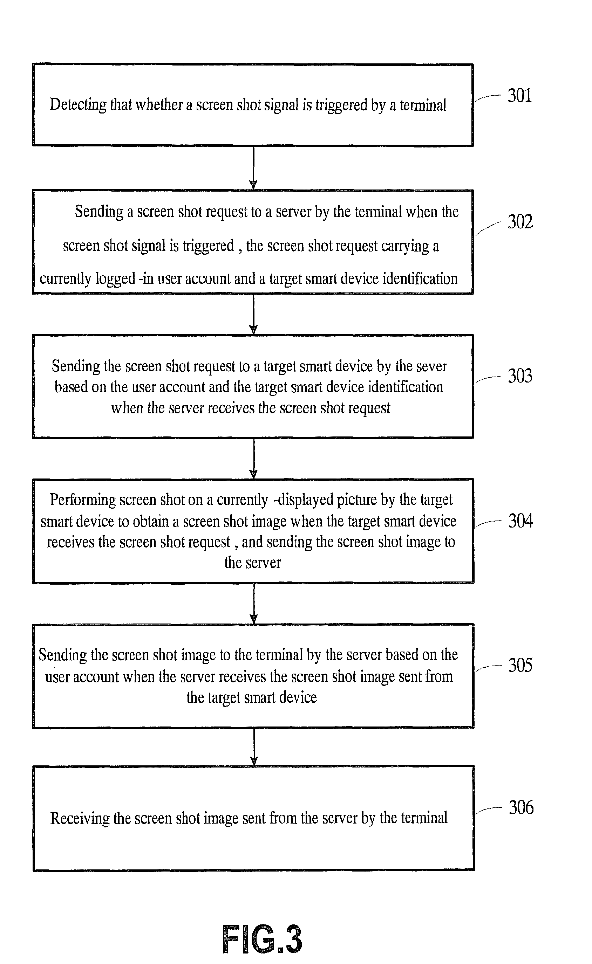

Fig. 3 is a flow chart showing another image acquiring method according to an exemplary embodiment. As shown in Fig. 3, the image acquiring method comprises the steps as follows.

Step 301, detecting that whether a screen shot signal is triggered by a terminal.

In the using process of smart devices, such as computers, smart TVs and the like with the display function, there are wonderful pictures and other pictures that users want to timely store frequently. To store the pictures timely, the terminal can control the smart device to perform screen shot, and in the embodiment of the invention, the terminal controls the smart device to perform screen shot via a screen shot signal, so that the terminal can detect whether to trigger a screen shot signal.

Wherein, the terminal may be a mobile phone or the like on which a smart home application can be installed, and can run the smart home application and detect whether the screen shot signal is triggered, and this embodiment of the invention does not specifically limit thereto.

In addition, detecting whether the screen shot signal is triggered can be performed on the basis of determining that the screen shot signal is triggered when the terminal receives a screen shot instruction according to the smart home application which is currently logged in with the user account. Of course, detecting whether the screen shot signal is triggered can also be performed on the basis of judging whether the smart home application which is currently logged in with the user account is in a running state when the terminal detects a specified operation, and determining that the screen shot signal is triggered when the smart home application is in the running state.

It should be noted that the screen shot instruction is configured to control the target smart device to perform screen shot on the image, and may be triggered by a user via a preset operation which may be a voice operation, a clicking operation or a gesture operation, and this embodiment of the invention does not specifically limit thereto.

In addition, the specified operation can be preset, and may be a shake operation, a knocking operation, or a specified gesture operation. Of course, in practical use, the specified operation can be another operation, such as a specified key operation, or the like, and this embodiment of the invention does not specifically limit thereto.

Further, when the specified operation is detected and the smart home application is in a stopping state, a prompt information can be displayed on the terminal, and is configured to prompt the user that the specified operation is detected and to determine whether to run the smart home application, and the terminal can start and run the smart home application to enable the smart home application to be in the running state when receiving a run instruction based on the prompt information, so as to further determine that the screen shot signal is triggered. However, the terminal can determine that the screen shot signal is not triggered when receiving a run rejection instruction based on the prompt information.

It should be noted that the prompt information can be displayed on the terminal in a display frame manner, and of course, can also be displayed in other manners, such as a popup, and this embodiment of the invention does not specifically limit thereto.

In addition, the operation instruction is configured to control the terminal to run the smart home application, the operation rejection instruction is configured to control the terminal not to run the smart home application, both of the operation instruction and the operation rejection operation can be triggered by the user via a preset operation based on the prompt information, and this embodiment of the invention does not specifically limit thereto.

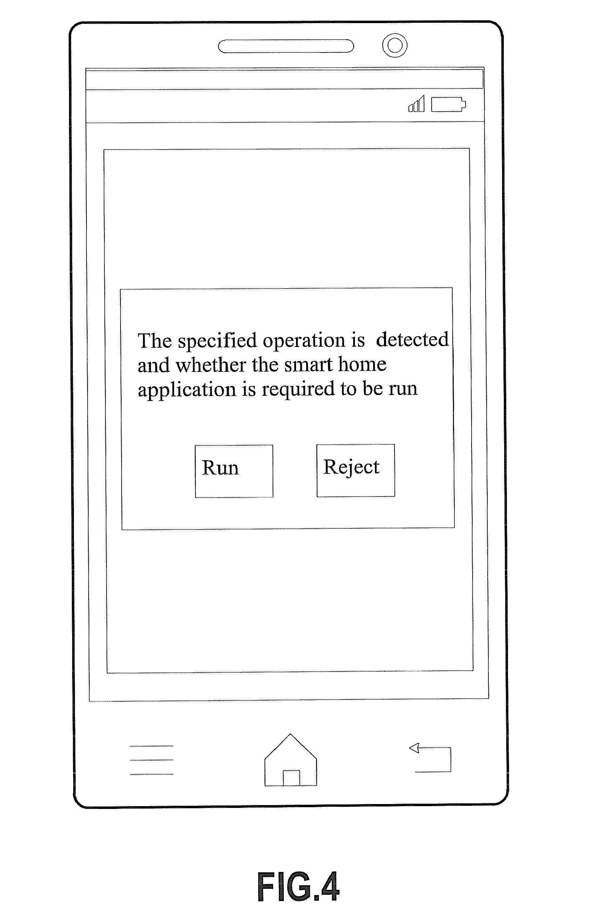

For example, when the terminal detects a specified operation and determines that the smart home application is in the stopping state, at this time, a prompt information acquired by the terminal is that "the specified operation is detected and whether the smart home application is required to be run", and the prompt information is displayed on an interface as shown in Fig. 4. Referring to Fig. 4, the interface on which the prompt information is displayed may furtherinclude buttons of "Run" and "Reject", the "Run" button is configured to trigger the run instruction, and the "Reject" is configured to trigger the run rejection instruction.

Step 302, sending a screen shot request to a server by the terminal when the screen shot signal is triggered, the screen shot request carrying a currently logged-in user account and a target smart device identification.

As the smart home application may be used by a plurality of smart devices with the display function and terminals simultaneously, that is, the server may provide service to the smart devices and the terminals simultaneously, in order to enable each terminal to control the corresponding target smart device and improve the success rate of image acquire by the terminal, when a screen shot single is triggered, the terminals may acquire user accounts through which the smart home applications installed thereon are logged in and target smart device identifications, and send screen shot requests, carrying the currently logged-in user accounts and the target smart device identifications, to the server, so as to distinguish different terminals and the target smart devices controlled by the terminals according to the currently logged-in user accounts and the target smart device identifications.

Wherein, the operation that the terminal acquires a target smart device identification may comprise: when receiving a display instruction, the terminal sends an identification acquiring request which carries the currently logged-in user account to the server; when receiving the identification acquiring request, the server acquires a plurality of corresponding smart device identifications from a stored corresponding relation between user accounts and smart device identifications based on the currently logged-in user account, and sends the smart device identifications to the terminal; the terminal displays the smart device identifications after receiving them; and after receiving the selection instruction of a specified smart device identification in the smart device identifications, the terminal determines the specified smart device identification as the target smart device identification.

It should be noted that the smart device identifications can be displayed on the terminal in a list manner or other manners, and this embodiment of the invention does not specifically limit thereto. When the smart device identifications are displayed on the terminal in a list manner, the server can generate a list based on the smart device identifications and send the smart device identifications to the terminal for displaying. Of course, the server can also directly send the smart device identifications to the terminal to enable the terminal to generate a list based on the smart device identifications, and this embodiment of the invention does not specifically limit thereto.

In addition, one or more specified smart device identifications are related to in the smart device identifications, and this embodiment of the invention does not specifically limit thereto. Moreover, the selection instruction of the specified smart device identification is configured to select a specified smart device identification from the smart device identifications, and may be triggered by the user via a preset operation, and this embodiment of the invention does not specifically limit thereto.

Further, before sending the identification acquiring request to the server, the terminal can bind the user account to a plurality of smart devices, so that the corresponding relation between the user accounts and the smart device identifications can be stored in the server, wherein the operation that the terminal binds the user account to the smart devices can refer to related arts, and this embodiment of the invention does not specifically limit thereto.

It should be noted that the currently logged-in user account is configured to allow the smart home application to log in, and is obtained after the user registers in the server in advance, and the server corresponds to the smart home application. Moreover, the user account can be texts, numbers, letters or punctuations, or combinations of the texts, the numbers, the letters and the punctuations, and this embodiment of the invention does not specifically limit thereto.

In addition, the target smart device identification is the identification of a target smart device, and is a unique identification of the target smart device which may be a smart device with the display function, such as a smart TV, a computer, a smart phone or the like, the target smart device identification may be the name, the factory serial number, or the like of the target smart device, and this embodiment of the invention does not specifically limit thereto.

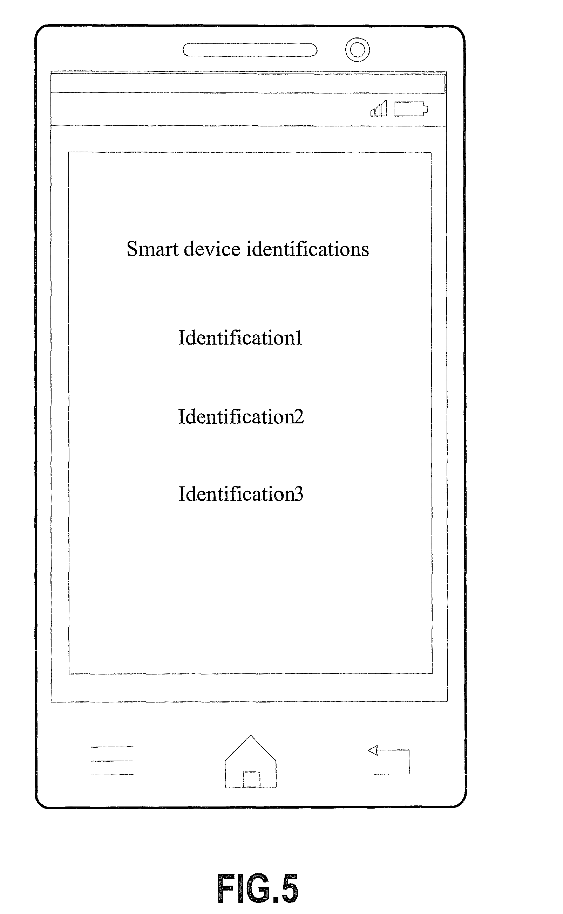

For example, when receiving a display instruction, the terminal sends an identification acquiring request, carrying the currently logged-in user account, to the server, when the server receives the identification acquiring request, if the user account is 12354252, the server acquires a plurality of corresponding smart device identifications, namely, the identification 1, the identification 2 and the identification 3, from a corresponding relation between user accounts and smart device identifications as shown in table 1 based on the user account, after that, the server sends the smart device identifications to the terminal; after receiving the smart device identifications, the terminal displays them on an interface as shown in Fig. 5; and the terminal determines the identification 2 as the target smart device identification after receiving the selection instruction of the identification 2 in the smart device identifications.

**Table 1**

| User accounts | Smart device identifications |
|---|---|
| 12354252 | Identification 1 |
| | Identification 2 |
| | Identification 3 |
| 123233252 | Identification 4 |
| | Identification 5 |

It should be noted that in the embodiment of the invention, although only the corresponding relation between the user accounts and the smart device identifications as shown in the table 1 is taken as an example, the embodiment of the invention is not limited by the table 1.

Step 303, sending the screen shot request to a target smart device by the server based on the user account and the target smart device identification when the server receives the screen shot request.

To enable the target smart device to respond the screen shot request of the terminal to send a screen shot image to the terminal, when receiving the screen shot request, the server can send the screen shot request to the target smart device based on the user account and the target smart device identification.

Step 304, performing screen shot on a currently-displayed picture by the target smart device to obtain a screen shot image when the target smart device receives the screen shot request, and sending the screen shot image to the server.

In the embodiment of the invention, after receiving the screen shot request, the target smart device can directly perform screen shot on the currently-displayed picture to obtain the screen shot image, and sends the screen shot image to the server.

To verify the screen shot request sending accuracy, before performing screen shot on the currently-displayed picture, the target smart device can acquire identification itself, and compares the acquired identification with the target smart device identification carried by the screen shot request, if they are the same, it is determined that the screen shot request is accurately sent, and the currently-displayed picture is subjected to screen shot to obtain the screen shot image which is then sent to the server, and if they are different, it is determined that the screen shot request sending is wrong, and screen shot on the currently-displayed picture is ignored.

Further, after the screen shot of the currently-displayed picture is performed through the target smart device and the screen shot image is obtained, the target smart device can also acquire information capable of illustrating attributes of the shot screen image, such as the screen shot time, the image resolution, the image format and the like, after that, the target smart device sends the screen shot image to the server, and can also send the screen shot time, the image resolution, the image format and the like to the server, and this embodiment of the invention does not specifically limit thereto.

Wherein, the screen shot time acquired by the target smart device may be configured to verify the freshness of the screen shot image, that is, when a network between the target smart device and the server fails and an image subjected to screen shot before the current screen shot request has not been sent to the server, the server can determine whether the current screen shot image is the latest one according the screen shot time of the current screen shot image, so as to ensure the freshness of the screen shot image. In addition, when the display resolution of the terminal is different from that of the target smart device, the image resolution and the image format of the screen shot image are sent to the terminal to help the terminal to regulate the display resolution thereof, so that the clearest screen shot image can be displayed.

Step 305, sending the screen shot image to the terminal by the server based on the user account after the server receives the screen shot image sent from the target smart device.

As the screen shot image may be lost or damaged in the sending, receiving or storage process, and the currently-displayed picture of the target smart device may appear only once, to improve the safety of the screen shot image to avoid a condition that the screen shot image cannot be acquired subsequently which is caused by the fact the user deletes the screen shot image by mistake, when the server receives the screen shot image sent from the target smart device, the server can also store the user account and the screen shot image to a corresponding relation between user accounts and screen shot images, so that eventhe screen shot image is deleted from the terminal by mistake subsequently, a first re-acquiring request, carrying the user account, can be sent to the server, and the server can acquire the corresponding screen shot image from the stored corresponding relation between the user accounts and the screen shot images based on the user account, and sends the screen shot image to the terminal.

Further, screen shot images in the corresponding relation between the use accounts and the screen shot images stored in the server are images obtained by performing screen shot on all of the smart devices, so that when the server sends the acquired screen shot images to the terminal, some network resources may be wasted and it's hard to distinguish that the screen shot images are obtained from which smart devices subjected to screen shot, and therefore, to save the network resources and distinguish each image obtained by performing screen shot on the corresponding target smart device, when receiving the screen shot images sent from the target smart devices, the server can also store the user accounts, the target smart device identifications and the screen shot images in a corresponding relation among the user accounts, the target smart device identifications and the screen shot images, then after a screen shot image is accidentally deleted from the terminal subsequently, a second re-acquiring request, carrying the user account and the target smart device identification, can be sent to the server, and the server can acquire the corresponding screen shot image from the stored corresponding relation among the user accounts, the target smart device identifications and the screen shot images based on the user account and the target smart device identification, and sends the screen shot image to the terminal.

For example, when receiving the screen shot image which is the image 2, the server can store the use account 12354252, the image 2 and the identification 2 in a corresponding relation among user accounts, target smart device identifications and screen shot images as show in the following table 2.

**Table 2**

| Users accounts | Target smart device identifications | Screen shot images |
|---|---|---|
| 12354252 | Identification 1 | Images 1 and 7 |
| | Identification 2 | Image 2 |
| | Identification 3 | Images 3 and 4 |
| 123233252 | Identification 4 | Image 5 |
| | Identification 5 | Image 6 |

It should be noted that in the embodiment of the invention, although only the corresponding relation among the user accounts, the target smart device identifications and the screen shot images as show in the table 2 is taken as an example, the embodiment of the invention is not limited by the table 2.

Step 306, receiving the screen shot image sent from the server by the terminal.

Wherein, the terminal can store the screen shot image when receiving the screen shot image sent from the server.

Further, when storing the screen shot image, the terminal may select a storage format of the screen shot image, and may also perform editing operations, such as cropping, stretching, rotating, brightness or contrast adjusting or the like on the screen shot image, and this embodiment of the invention does not specifically limit thereto.

In the embodiment of the invention, a terminal can run a smart home application, through login of the smart home application, a user account is bound to a smart device, and a corresponding relation between user accounts and smart device identifications is stored in a server, detecting whether a screen shot signal is triggered is performed, when it is detected that the screen shot signal is triggered, the terminal sends a screen shot request to the server, the server sends the screen shot request to a target smart device, the target smart device receives the screen shot request, performs screen shot on a currently-displayed picture to obtain an image, and sends the screen shot image to the server, and the server sends the screen shot image to the terminal, so that the terminal can fast and accurately acquire images from pictures which are displayed on the target smart device and need to be stored, the operation is simple, and the image acquiring efficiency is improved. In addition, the server stores the screen shot image, if the screen shot image is lost or damaged in the sending, receiving or storage process, the terminal can re-acquire the screen shot image from the server based on the use account, so that the acquiring efficiency of the screen shot image is improved.

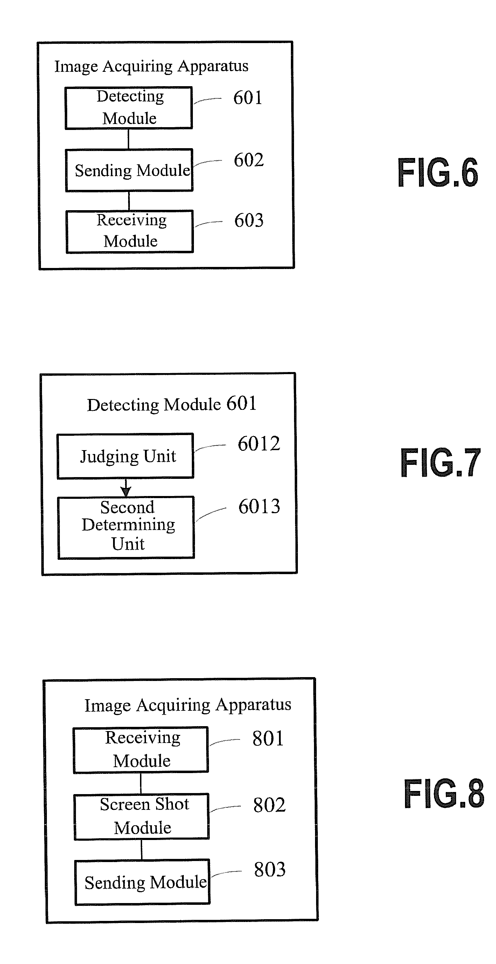

Fig. 6 is a block diagram of a first image acquiring apparatus according to an exemplary embodiment. As shown in Fig. 6, the apparatus may be applied in a terminal. The apparatus comprises a detecting module 601, a sending module 602 and a receiving module 603, wherein
the detecting module 601 is configured to detect whether a screen shot signal is triggered;
the sending module 602 is configured to send a screen shot request to a server when the screen shot signal is triggered, wherein the screen shot request carries a currently logged-in user account and a target smart device identification, so that the server can send the screen shot request to a target smart device based on the user account and the target smart device identification; and
a receiving module 603 is configured to receive from the server a screen shot image obtained by the target smart device performing screen shot on a currently-displayed picture based on the screen shot request.

In another embodiment of the invention, the detecting module 601 comprises a first determining unit 6011.

The first determining unit is configured to determine that the screen shot signal is triggered when a smart home application which is currently logged in with the user account receives a screen shot instruction.

In another embodiment of the invention, as shown in Fig. 7, the detecting module 601 comprises a judging unit 6012 and a second determining unit 6013, wherein
the judging unit 6012 is configured to judge whether the smart home application which is currently logged in with the user account is in a running state when a specified operation is detected; and
the second determining unit 6013 is configured to determine that the screen shot signal is triggered when the smart home application is in the running state.

In another embodiment of the invention, the specified operation can be a shake operation, a knocking operation, or a specified gesture operation.

In the embodiment of this invention, whether the screen shot signal is triggered is detected, when the screen shot signal is triggered, the screen shot request is sent to the server to enable the server to send the screen shot request to the target smart device, and the screen shot image from the server is received, so that a user can fast and accurately acquire an image which he or she wants to acquire by triggering the screen shot signal when he or she finds the image on the target smart device, the operation is simple, and the image acquiring efficiency is improved.

With respect to the devices in the above embodiments, the specific manners for performing operations in individual modules therein have been described in detail in the embodiments regarding the related methods and will not be elaborated herein.

Fig. 8 is a block diagram of a second image acquiring apparatus according to an exemplary embodiment. As shown in Fig. 8, the apparatus comprises a receiving module 801, a screen shot module 802 and a sending module 803, wherein
the receiving module 801 is configured to receive a screen shot request from a server, wherein the screen shot request was sent to the server by a terminal when it detected that a screen shot signal is triggered;
the screen shot module 802 is configured to perform screen shot on a currently-displayed picture based on the screen shot request to obtain a screen shot image; and
the sending module 803 is configured to send the screen shot image to the server to enable the server to send the screen shot image to the terminal.

In another embodiment of the invention, before performing screen shot on the currently-displayed picture, the target smart device can acquire identification itself, and compares the acquired identification with the target smart device identification carried by the screen shot request, if they are the same, it is determined that the screen shot request is accurately sent, and screen shot of the currently-displayed picture is performed to obtain the screen shot image which is then sent to the server, and if they are different, it is determined that the screen shot request sending is wrong, and screen shot of the currently-displayed picture is ignored.

In another embodiment of the invention, after the screen shot of the currently-displayed picture is performed through the target smart device and the screen shot image is obtained, the target smart device can also acquire information capable of illustrating attributes of the shot screen image, such as the screen shot time, the image resolution, the image format and the like, after that, when the target smart device sends the screen shot image to the server, the screen shot time, the image resolution, the image format and the like can also be sent to the server, and this embodiment of the invention does not specifically limit thereto.

In another embodiment of the invention, the target smart device can be a smart device, such as a smart TV, a computer or the like with the display function, and this embodiment of the invention does not specifically limit thereto.

In the embodiments of the invention, when receiving a screen shot request, which is sent by the terminal to the server when it is detected that the screen shot signal is triggered, the target smart device performs screen shot on the currently-displayed picture based on the screen shot request to obtain a screen shot image, and sends the screen shot image to the server to enable the server to send the screen shot image to the terminal, so that a user can fast and accurately acquire the currently-displayed picture when he or she finds an image that he or she wants to acquire on the target smart device, the operation is simple, and the image acquiring efficiency is improved.

With respect to the devices in the above embodiments, the specific manners for performing operations in individual modules therein have been described in detail in the embodiments regarding the related methods and will not be elaborated herein.

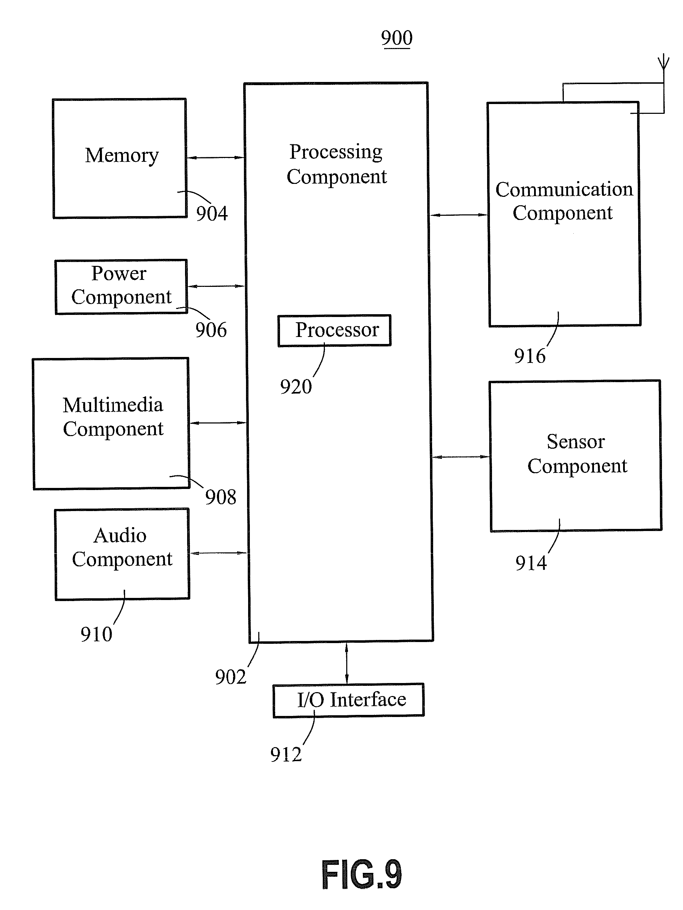

Fig. 9 is a block diagram of a third image acquiring apparatus 900 according to an exemplary embodiment. Referring to Fig. 9, the apparatus 900 may include one or more of the following components: a processing component 902, a memory 904, a power component 906, a multimedia component 908, an audio component 910, an input/output (I/O) interface 912, a sensor component 914, and a communication component 916.

The processing component 902 typically controls overall operations of the apparatus 900, such as the operations associated with display, telephone calls, data communications, camera operations, and recording operations. The processing component 902 may include one or more processors 920 to execute instructions to perform all or part of the steps in the above described methods. Moreover, the processing component 902 may include one or more modules which facilitate the interaction between the processing component 902 and other components. For instance, the processing component 902 may include a multimedia module to facilitate the interaction between the multimedia component 908 and the processing component 902.

The memory 904 is configured to store various types of data to support the operation of the apparatus 900. Examples of such data include instructions for any applications or methods operated on the apparatus 900, contact data, phonebook data, messages, pictures, video, etc. The memory 904 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 906 provides power to various components of the apparatus 900. The power component 906 may include a power management system, one or more power sources, and any other components associated with the generation, management, and distribution of power in the apparatus 900.

The multimedia component 908 includes a screen providing an output interface between the apparatus 900 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 908 includes a front camera and/or a rear camera. The front camera and the rear camera may receive an external multimedia datum while the apparatus 900 is in an operation mode, such as a photographing mode or a video mode. Each of the front camera and the rear camera may be a fixed optical lens system or have focus and optical zoom capability.

The audio component 910 is configured to output and/or input audio signals. For example, the audio component 910 includes a microphone ("MIC") configured to receive an external audio signal when the apparatus 900 is in an operation mode, such as a call mode, a recording mode, and a voice recognition mode. The received audio signal may be further stored in the memory 904 or transmitted via the communication component 916. In some embodiments, the audio component 910 further includes a speaker to output audio signals.

The I/O interface 912 provides an interface between the processing component 902 and peripheral interface modules, such as a keyboard, a click wheel, buttons, and the like. The buttons may include, but are not limited to, a home button, a volume button, a starting button, and a locking button.

The sensor component 914 includes one or more sensors to provide status assessments of various aspects of the apparatus 900. For instance, the sensor component 914 may detect an open/closed status of the apparatus 900, relative positioning of components, e.g., the display and the keypad, of the apparatus 900, a change in position of the apparatus 900 or a component of the apparatus 900, a presence or absence of user contact with the apparatus 900, an orientation or an acceleration/deceleration of the apparatus 900, and a change in temperature of the apparatus 900. The sensor component 914 may include a proximity sensor configured to detect the presence of nearby objects without any physical contact. The sensor component 914 may also include a light sensor, such as a CMOS or CCD image sensor, for use in imaging applications. In some embodiments, the sensor component 914 may also include an accelerometer sensor, a gyroscope sensor, a magnetic sensor, a pressure sensor, or a temperature sensor.

The communication component 916 is configured to facilitate communication, wired or wirelessly, between the apparatus 900 and other devices. The apparatus 900 can access a wireless network based on a communication standard, such as WiFi, 2G, or 3G, or a combination thereof. In one exemplary embodiment, the communication component 916 receives a broadcast signal or broadcast associated information from an external broadcast management system via a broadcast channel. In one exemplary embodiment, the communication component 916 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 900 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 904, executable by the processor 920 in the apparatus 900, for performing the above-described methods. For example, the non-transitory computer-readable storage medium may be a read-only memory (ROM), a random access memory (RAM), a CD-ROM, a magnetic tape, a floppy disc, an optical data storage device, or the like.

There is provided a non-transitory computer-readable storage medium, when instructions in the storage medium are executed by the processor of the target device, the target device can perform an image acquiring method which comprises:
detecting whether a screen shot signal is triggered;
sending a screen shot request to a server when the screen shot signal is triggered, the screen shot request carrying a currently logged-in user account and a target smart device identification, so as to enable the server to send the screen shot request to a target smart device based on the user account and the target smart device identification; and
receiving from the server a screen shot image obtained by the target smart device performing screen shot on a currently-displayed picture based on the screen shot request.

In another embodiment of the invention, detecting whether the screen shot signal is triggered comprises:
determining that the screen shot signal is triggered when a smart home application which is currently logged in with the user account receives a screen shot instruction.

In another embodiment of the invention, detecting whether a specified signal is triggered comprises:
judging whether the smart home application which is currently logged in with the user account is in a running state when a specified operation is detected; and
determining that the screen shot signal is triggered when the smart home application is in the running state.

In another embodiment of the invention, the specified operation can be a shake operation, a knocking operation, or a specified gesture operation.

In the embodiment of this invention, whether the screen shot signal is triggered is detected, when the screen shot signal is triggered, the screen shot request is sent to the server to enable the server to send the screen shot request to the target smart device, and the screen shot image from the server is received, so that a user can fast and accurately acquire an image which he or she wants to acquire by triggering the screen shot signal when he or she finds the image on the target smart device, the operation is simple, and the image acquiring efficiency is improved.

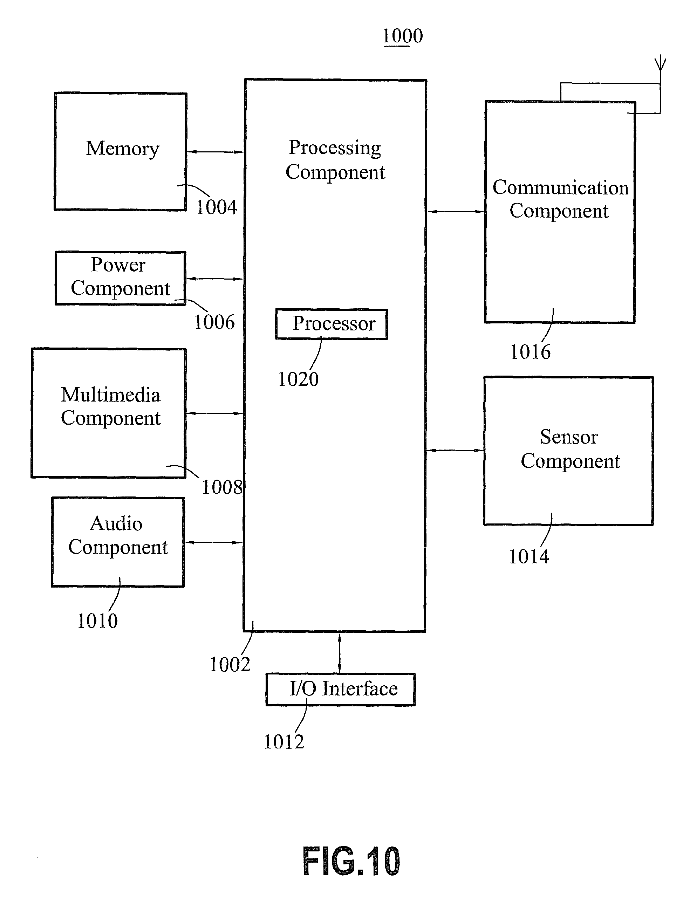

Fig. 10 is a block diagram of a fourth image acquiring apparatus 1000 according to an exemplary embodiment. Referring to Fig. 10, the apparatus 1000 may include one or more of the following components: a processing component 1002, a memory 1004, a power component 1006, a multimedia component 1008, an audio component 1010, an input/output (I/O) interface 1012, a sensor component 1014, and a communication component 1016.

The processing component 1002 typically controls overall operations of the apparatus 1000, such as the operations associated with display, telephone calls, data communications, camera operations, and recording operations. The processing component 1002 may include one or more processors 1020 to execute instructions to perform all or part of the steps in the above described methods. Moreover, the processing component 1002 may include one or more modules which facilitate the interaction between the processing component 1002 and other components. For instance, the processing component 1002 may include a multimedia module to facilitate the interaction between the multimedia component 1008 and the processing component 1002.

The memory 1004 is configured to store various types of data to support the operation of the apparatus 1000. Examples of such data include instructions for any applications or methods operated on the apparatus 1000, messages, pictures, video, etc. The memory 1004 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1006 provides power to various components of the apparatus 1000. The power component 1006 may include a power management system, one or more power sources, and any other components associated with the generation, management, and distribution of power in the apparatus 1000.

The multimedia component 1008 includes a screen providing an output interface between the apparatus 1000 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1008 includes a front camera and/or a rear camera. The front camera and the rear camera may receive an external multimedia datum while the apparatus 1000 is in an operation mode, such as a photographing mode or a video mode. Each of the front camera and the rear camera may be a fixed optical lens system or have focus and optical zoom capability.

The audio component 1010 is configured to output and/or input audio signals. For example, the audio component 1010 includes a microphone ("MIC") configured to receive an external audio signal when the apparatus 1000 is in an operation mode, such as a recording mode, and a voice recognition mode. The received audio signal may be further stored in the memory 1004 or transmitted via the communication component 1016. In some embodiments, the audio component 1010 further includes a speaker to output audio signals.

The I/O interface 1012 provides an interface between the processing component 1002 and peripheral interface modules, such as a keyboard, a click wheel, buttons, and the like. The buttons may include, but are not limited to, a home button, a volume button, a starting button, and a locking button.

The sensor component 1014 includes one or more sensors to provide status assessments of various aspects of the apparatus 1000. For instance, the sensor component 1014 may detect an open/closed status of the apparatus 1000, relative positioning of components, e.g., the display and the keypad, of the apparatus 1000, a change in position of the apparatus 1000 or a component of the apparatus 1000, a presence or absence of user contact with the apparatus 1000, an orientation or an acceleration/deceleration of the apparatus 1000, and a change in temperature of the apparatus 1000. The sensor component 1014 may include a proximity sensor configured to detect the presence of nearby objects without any physical contact. The sensor component 1014 may also include a light sensor, such as a CMOS or CCD image sensor, for use in imaging applications. In some embodiments, the sensor component 1014 may also include an accelerometer sensor, a gyroscope sensor, a magnetic sensor, a pressure sensor, or a temperature sensor.

The communication component 1016 is configured to facilitate communication, wired or wirelessly, between the apparatus 1000 and other devices. The apparatus 1000 can access a wireless network based on a communication standard, such as WiFi, 2G, or 3G, or a combination thereof. In one exemplary embodiment, the communication component 1016 receives a broadcast signal or broadcast associated information from an external broadcast management system via a broadcast channel. In one exemplary embodiment, the communication component 1016 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 1000 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium comprising instructions, such as comprised in the memory 1004, executable by the processor 1020 in the apparatus 1000, for performing the above-described methods. For example, the non-transitory computer-readable storage medium may be a ROM, a RAM, a CD-ROM, a magnetic tape, a floppy disc, an optical data storage device, and the like.

There is provided a non-transitory computer-readable storage medium, when instructions in the storage medium are executed by the processor of the target device, the target device can perform an image acquiring method which comprises:
receiving a screen shot request sent from a server, wherein the screen shot request was sent to the server by a terminal when it detected that a screen shot signal is triggered;
performing screen shot on a currently-displayed picture based on the screen shot request to obtain a screen shot image; and
sending the screen shot image to the server to enable the server to send the screen shot image to the terminal.

In another embodiment of the invention, before performing screen shot on the currently-displayed picture, the target smart device can acquire identification itself, and compares the acquired identification with the target smart device identification carried by the screen shot request, if they are the same, it is determined that the screen shot request is accurately sent, and screen shot of the currently-displayed picture is performed to obtain the screen shot image which is sent to the server, and if they are different, it is determined that the screen shot request sending is wrong, and screen shot of the currently-displayed picture is ignored.

In another embodiment of the invention, after the screen shot of the currently-displayed picture is performed through the target smart device and the screen shot image is obtained, the target smart device can also acquire information capable of illustrating attributes of the shot screen image, such as the screen shot time, the image resolution, the image format and the like, after that, when the target smart device sends the screen shot image to the server, the screen shot time, the image resolution, the image format and the like can also be sent to the server, and this embodiment of the invention does not specifically limit thereto.

In the embodiments of the invention, when receiving a screen shot request which is sent by the terminal to the server when it is detected that the screen shot signal is triggered, the target smart device performs screen shot on the currently-displayed picture based on the screen shot request to obtain a screen shot image, and sends the screen shot image to the server to enable the server to send the screen shot image to the terminal, so that a user can fast and accurately acquire the currently-displayed picture when he or she finds an image that he or she wants to acquire on the target smart device, the operation is simple, and the image acquiring efficiency is improved.

Other embodiments of the invention will be apparent to those skilled in the art from consideration of the specification and practice of the invention disclosed here. This application is intended to cover any variations, uses, or adaptations of the invention following the general principles thereof and including such departures from the present invention as come within known or customary practice in the art. It is intended that the specification and examples be considered as exemplary only, with a true scope and spirit of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. An image acquiring method suitable to be applied to a terminal, **characterized by** comprising:
detecting (201) whether a screen shot signal is triggered;
sending (202) a screen shot request to a server when the screen shot signal is triggered, the screen shot request carrying a currently logged-in user account and a target smart device identification, so as to enable the server to send the screen shot request to a target smart device based on the user account and the target smart device identification; and
receiving (203) from the server a screen shot image obtained by the target smart device performing screen shot on a currently-displayed picture based on the screen shot request.

2. The method of claim 1, **characterized in that** detecting (201) whether the screen shot signal is triggered comprises:
determining that the screen shot signal is triggered when a smart home application which is currently logged in with the user account receives a screen shot instruction.

3. The method of claim 1, **characterized in that** detecting (201) whether the screen shot signal is triggered comprises:
judging whether the smart home application which is currently logged in with the user account is in a running state when a specified operation is detected; and
determining that the screen shot signal is triggered when the smart home application is in the running state.

4. The method of claim 3, **characterized in that** the specified operation is for example a shake operation, a knocking operation, or a specified gesture operation.

5. An image acquiring apparatus suitable to be applied in a terminal, **characterized by** comprising:
a detecting module (601) configured to detect whether a screen shot signal is triggered;
a sending module (602) configured to send a screen shot request to a server when the screen shot signal is triggered, the screen shot request carrying a currently logged-in user account and a target smart device identification, so as to enable the server to send the screen shot request to a target smart device based on the user account and the target smart device identification; and
a receiving module (603) configured to receive from the server a screen shot image obtained by the target smart device performing screen shot on a currently-displayed picture based on the screen shot request.

6. The apparatus of claim 5, **characterized in that** the detecting module (601) comprises:
a first determining unit configured to determine that the screen shot signal is triggered when a smart home application which is currently logged in with the user account receives a screen shot instruction.

7. The apparatus of claim 5, **characterized in that** the detecting module (601) comprises:
a judging unit (6012) configured to judge whether the smart home application which is currently logged in with the user account is in a running state when a specified operation is detected; and
a second determining unit (6013) configured to determine that the screen shot signal is triggered when the smart home application is in the running state.

8. The apparatus of claim 7, **characterized in that** the specified operation is for example a shake operation, a knocking operation, or a specified gesture operation.

9. An image acquiring apparatus suitable to be applied in a smart device, **characterized by** comprising:
a receiving module (801) configured to receive a screen shot request from a server, wherein the screen shot request was sent to the server by a terminal when it detected that a screen shot signal is triggered;
a screen shot module (802) configured to perform screen shot on a currently-displayed picture based on the screen shot request to obtain a screen shot image; and
a sending module (803) configured to send the screen shot image to the server to enable the server to send the screen shot image to the terminal.

10. An image acquiring apparatus suitable to be applied in a terminal, **characterized by** comprising:
a processor; and
a memory configured to store instructions executable by the processor,
wherein the processor is configured to:
detect whether a screen shot signal is triggered;
send a screen shot request to a server when the screen shot signal is triggered, the screen shot request carrying a currently logged-in user account and a target smart device identification, so as to enable the server to send the screen shot request to a target smart device based on the user account and the target smart device identification; and
receive from the server a screen shot image obtained by the target smart device performing screen shot on a currently-displayed picture based on the screen shot request.

11. The apparatus of claim 10, wherein the processor is further configured to: determine that the screen shot signal is triggered when a smart home application which is currently logged in with the user account receives a screen shot instruction.

12. The apparatus of claim 10, wherein the processor is further configured to: judge whether the smart home application which is currently logged in with the user account is in a running state when a specified operation is detected; and determine that the screen shot signal is triggered when the smart home application is in the running state.

13. An image acquiring apparatus suitable to be applied in a smart device, **characterized by** comprising:
a processor; and
a memory configured to store instructions executable by the processor,
wherein the processor is configured to:
receive a screen shot request from a server, wherein the screen shot request was sent to the server by a terminal when it detected that a screen shot signal is triggered;
perform screen shot on a currently-displayed picture based on the screen shot request to obtain a screen shot image; and
send the screen shot image to the server to enable the server to send the screen shot image to the terminal.

14. A computer program including instructions for executing the steps of an image acquiring method according to any one of claims 1 to 4, when said program is executed by a computer.

15. A recording medium readable by a computer and having recorded thereon a computer program including instructions for executing the steps of an image acquiring method according to any one of claims 1 to 4.
